**Europäisches Patentamt**

**European Patent Office**

**Office européen des brevets**

(11) Veröffentlichungsnummer: **0 139 976**

**A1**

(12) # EUROPÄISCHE PATENTANMELDUNG

(21) Anmeldenummer: **84109916.1**

(22) Anmeldetag: **21.08.84**

(51) Int. Cl.⁴: **C 02 F 3/28**

(30) Priorität: **25.08.83 DE 3330696**

(43) Veröffentlichungstag der Anmeldung:
**08.05.85 Patentblatt 85/19**

(84) Benannte Vertragsstaaten:
**AT BE CH DE FR GB IT LI NL SE**

(71) Anmelder: **Linde Aktiengesellschaft
Abraham-Lincoln-Strasse 21
D-6200 Wiesbaden(DE)**

(72) Erfinder: **Reimann, Hans, Dr. rer. nat.
Rudolf-Wilke-Weg 21
D-8000 München 71(DE)**

(72) Erfinder: **Morper, Manfred, Dr. rer. nat.
Zugspitzstrasse
D-8035 Gauting(DE)**

(74) Vertreter: **Schaefer, Gerhard, Dr.-
Linde Aktiengesellschaft Zentrale Patentabteilung
D-8023 Höllriegelskreuth(DE)**

(54) **Anlage zum anaeroben Abbau organischer Substrate.**

(57) Die Erfindung betrifft eine Anlage zum anaeroben Abbau organischer Substrate mit einem unter anaeroben Bedingungen betriebenen Anaerobreaktor, der eine Reaktionszone 1 und dieser nachgeschaltet eine Feststoffabtrennzone 3, eine Zuleitung 2 für zu behandelndes Substrat und eine Ableitung 6 für behandeltes Substrat sowie eine Gasableitung 15 für Faulgas aufweist. Zur Verwirklichung einer möglichst wirtschaftlichen Betriebsweise mit hoher Reinigungsleistung ist die Feststoffabtrennzone 3 außen ringförmig um die Reaktionszone 1 angeordnet, wobei die Feststoffabtrennzone 3 durch zumindest teilweise schräge Anordnung ihrer Außenwand 4 und/oder der Trennwand 7 zwischen Reaktionszone 1 und Feststoffabtrennzone 3 im Querschnitt steil trichterförmig ausgebildet ist. Außerdem ist in der Feststoffabtrennzone 3 eine ringförmige Tauchwand 10 angebracht und im unteren Bereich der Feststoffabtrennzone 3 eine Rückführeinrichtung 11, 12, 13 für Schlamm in die Reaktionszone 1 vorhanden.

Fig. 1

EP 0 139 976 A1

## Anlage zum anaeroben Abbau
## organischer Substrate

Die Erfindung betrifft eine Anlage zum anaeroben Abbau organischer Substrate mit einem unter anaeroben Bedingungen betriebenen Anaerobreaktor, der eine Reaktionszone und dieser nachgeschaltet eine Feststoffabtrennzone, eine Zuleitung für zu behandelndes Substrat und eine Ableitung für behandeltes Substrat sowie eine Gasableitung für Faulgas aufweist.

Ein solcher Anaerobreaktor ist in der DE-OS 29 04 449 für die Reinigung von organische Inhaltsstoffe aufweisendem Abwasser beschrieben. Bei diesem bekannten Anaerobreaktor ist die Feststoffabtrennzone im oberen Bereich innerhalb der Reaktionszone ausgebildet. Der Zulauf des zu behandelnden Abwassers ist im unteren Bereich der Reaktionszone angeordnet, während der Ablauf für behandeltes Abwasser am oberen Bereich der Feststoffabtrennzone angeschlossen ist. Die Zufuhr des Schlamm-Wasser-Gemisches aus der Reaktionszone zur Feststoffabtrennzone erfolgt über einen in der Mitte angeordneten, vertikalen Verbindungskanal mit oberem Überlauf, dessen unteres Ende einen konisch erweiterten Einlaß für den freien Durchtritt der im Reaktionsteil gebildeten Gasblasen aufweist. Für den Rücklauf des abgesetzten Schlamms ist im Boden der Feststoffabtrennzone eine Öffnung vorhanden, der der abgesetzte Schlamm mit Hilfe eines Schlammräumers zugeschoben wird.

Nachteilig bei diesem Anaerobreaktor ist, daß die Schlammrückführung durch die Bodenöffnung der Feststoffabtrennzone durch aufsteigende Gasblasen behindert wird, was dadurch bedingt ist, daß auch unmittelbar unterhalb der Bodenöffnung der Feststoffabtrennzone in der Reaktionszone eine Gasentwicklung stattfindet und kaum Dichteunterschiede zwischen dem Schlamm oberhalb der Bodenöffnung und dem Flüssigkeitsfeststoffgemisch unterhalb der Bodenöffnung vorhanden sind. Dazu kommt , daß der durch die Bodenöffnung in die Reaktionszone zurücksinkende Schlamm aufgrund der Flotationswirkung des inder Reaktionszone aufsteigenden Gases nur in geringem Umfang in den unteren Teil der Reaktionszone gelangt, wo aber zum Abbau des ankommenden, organische Inhaltsstoffe enthaltenden Abwassers am meisten Biomasse benötigt wird. Statt dessen verbleibt der Schlamm im wesentlichen im oberen Bereich der Reaktionszone, wobei noch die Gefahr besteht, daß ein Teil des die Bodenöffnung verlassenden Schlamms aufgrund der vorhandenen Strömung und Gasentwicklung direkt wieder über den vertikalen Verbindungskanal in die Feststoffabtrennzone transportiert wird.

Der Erfindung liegt die Aufgabe zugrunde, eine Anlage der eingangs genannten Art so auszugestalten, daß auf einfache Weise auch bei hoher Belastung ein möglichst wirtschaftlicher Betrieb mit möglichst hoher Reinigungsleistung erreicht werden kann.

Diese Aufgabe wird erfindungsgemäß dadurch gelöst, daß die Feststoffabtrennzone außen ringförmig um die Reaktionszone angeordnet ist, die Feststoffabtrennzone durch zumindest teilweise schräge Anordnung ihrer Außenwand und/oder der Trennwand zwischen Reaktionszone und Feststoffabtrennzone im Querschnitt steil trichterförmig ausgebildet ist, in der Feststoffabtrennzone eine ringförmige Tauchwand angebracht ist und im unteren Bereich der Feststoffabtrennzone eine Rückführeinrichtung für Schlamm in die Reaktionszone vorhanden ist.

Als organische Substrate, die in einem solchen Anaerobreaktor abgebaut und zur Faulgaserzeugung genutzt werden können, kommen vor allem industrielle und gewerbliche Abwässer, Abwasserschlämme sowie organische Rest- und Abfallstoffe in Frage, wobei für die Verarbeitung von organischen Feststoffen genügend Zell- und Oberflächenwasser vorhanden sein muß.

Mit der ringförmigen Anordnung der Feststoffabtrennzone um die Reaktionszone wird erreicht, daß das die Reaktionszone umgebende Flüssigkeits-Feststoffgemisch als Wärmeisolierung für die Reaktionszone wirkt, so daß die für die anaeroben Abbauvorgänge erforderlichen Temperaturen von 35 bis 45 ° ohne weiteres aufrechterhalten werden können. Eine aufwendige Isolierung und/oder eine Wärmezufuhr für die Reaktionszone kann damit entfallen. Ebenso ist es auch nicht notwendig, die Feststoffabtrennzone mit einer Wärmeisolierung zu versehen, da zum einen der behandelte Ablauf durchaus sich abkühlen darf und zum anderen eine Abkühlung des sich absetzenden Schlamms eine verringerte Gasbildung im Schlamm und dadurch eine bessere Eindickung bewirkt.

Die steil trichterförmige Ausbildung der Feststoffabtrennzone erlaubt ein Sammeln des sich absetzenden Schlamms im unteren Bereich der Feststoffabtrennzone, ohne daß Schlammräumeinrichtungen notwendigerweise vorhanden sein müssen. Die ringförmige Tauchwand begünstigt dabei den Absetzvorgang des Schlamms insofern, als dadurch die Feststoffabtrennzone in eine dem Einlauf der Feststoffabtrennzone unmittelbar benachbarte, eine nach unten gerichtete Strömung aufweisende Entgasungszone, eine im unteren Bereich der Tauchwand sowie unterhalb der Tauchwand vorhandene Schlamm-Flüssigkeitsabtrennzone und eine dem Ablauf benachbarte, eine nach oben gerichtete Strömung aufweisende Klarwasserzone aufgeteilt wird. Die am Flüssigkeits-Feststoffgemisch anhaftenden Gasblasen können somit bereits beim Einströmen in die Feststoffabtrennzone abgeschieden werden. Zur Unterstützung des Entgasungsvorgangs in der Entgasungszone der Feststoffabtrennzone wird dabei der in der Trennwand zwischen Reaktionszone und Feststoffabtrennzone vorhandene Einlauf zweckmäßigerweise mit Leitblechen versehen, die zunächst eine nach oben gerichtete Strömung des Flüssigkeits-Feststoffgemisches in der Entgasungszone erzeugen.

Das Eindicken des sich absetzenden Schlamms aufgrund der steil trichterförmigen Ausbildung der Feststoffabtrennzone wirkt sich insofern günstig auf die Rückführung des Schlamms aus, als dann bereits erhebliche Dichteunterschiede zwischen dem eingedickten Schlamm und dem in der Reaktionszone vorhandenen Flüssigkeits-Feststoffgemisch bestehen, wodurch der Schlamm ohne Schwierigkeit auch bis in den unteren Bereich der Reaktionszone zurückgeführt werden kann. Dies wird noch zusätzlich durch die im unteren Bereich der Feststoffabtrennzone angeordnete Rückführeinrichtung für Schlamm unterstützt.

Wird für die steil trichterförmige Ausbildung der Feststoffabtrennzone die Außenwand der Feststoffabtrennzone senkrecht und die Trennwand der Reaktionszone entsprechend
schräg angeordnet, so daß sich der Querschnitt der Reaktionszone nach oben konisch verjüngt, kann der Wasserdruck
auf die Außenwand der Feststoffabtrennzone gegenüber einer
senkrechten Anordnung der Trennwand und einer entsprechend
schräg nach oben verlaufenden Außenwand der Feststoffabtrennzone erheblich reduziert werden. Entsprechend niedrig
kann dann auch die baustatische Festigkeit der Außenwand
angesetzt werden, wodurch sich die Baukosten verringern.

Eine vorteilhafte Ausgestaltung des Erfindungsgedankens
besteht darin, daß die Reaktionszone und die Feststoffabtrennzone mittels einer Abdeckung gegen die Atmosphäre
geschlossen ausgebildet sind und die Trennwand sowie die
Tauchwand oberhalb des sich ausbildenden Flüssigkeitsspiegels Gasdurchtrittsöffnungen aufweisen. Eine solche
gegen die Atmosphäre geschlossene Abdeckung der Reaktionszone und der Feststoffabtrennzone verhindert, daß lästige Geruchsstoffe in die Umgebung entweichen. Dabei ist
die Abdeckung auf einfache Weise zu verwirklichen, da
aufgrund der steil trichterförmigen Ausbildung der Feststoffabtrennzone auf eine Schlammräumeinrichtung verzichtet werden kann.

Um eine Rückführung des Schlamms aus der Feststoffabtrennzone in den unteren Bereich der Reaktionszone zu
ermöglichen, ist es zweckmäßig, die Rückführeinrichtung
für Schlamm als eine vom unteren Bereich der Feststoffabtrennzone zum unteren Bereich der Reaktionszone führende Schlammrückleitung mit Förderpumpe auszubilden.
Eine solche Rückführeinrichtung ist vor allem dann sinnvoll, wenn die Feststoffabtrennzone sich nicht vollständig über die Höhe der Reaktionszone erstreckt. Trotzdem kann dann der Schlamm auf diese Weise über die gesamte, von den aufsteigenden Gasblasen durchmischte Reaktionszone verteilt werden, so daß die Konzentration an methanbildender Biomasse und damit die Raumbelastung des Reaktors erhöht werden kann. Über die Förderpumpe kann dabei eine erforderliche Mengenregelung des zurückzuführenden Schlamms vorgenommen werden.

Statt dessen besteht jedoch auch die Möglichkeit, daß die Rückführeinrichtung für Schlamm mindestens eine in der Trennwand zwischen Reaktionszone und Feststoffabtrennzone vorhandene Durchtrittsöffnung mit einer Einrichtung zur Einstellung des Mengenstroms aufweist. Damit wird die Rückführeinrichtung wesentlich einfacher im Aufbau und bedarf im Betrieb auch keiner zusätzlichen Energie. Dazu kommt, daß der Schlamm dann nicht mehr mechanischen Belastungen, wie sie in einer Förderpumpe auftreten, ausgesetzt werden muß. Eine solche Ausbildung der Rückführeinrichtung ist insbesondere dann zweckmäßig, wenn gemäß einer weiteren vorteilhaften Ausgestaltung der Erfindung die Höhe der Feststoffabtrennzone weitgehend der Höhe der Reaktionszone entspricht. Dies führt dann aufgrund der Isolationswirkung der Feststoffabtrennzone auf der gesamten Höhe der Reaktionszone nicht nur zu einem einfachen Aufbau der Gesamtanlage, sondern ermöglicht auch eine besonders weitgehende Eindickung des zurückzuführenden Schlamms, so daß beim Rückleiten des Schlamms in die Reaktionszone in deren Einlaufbereich eine hohe Biomassenkonzentration aufrechterhalten werden kann.

Um in der Feststoffabtrennzone ein gutes Absetzverhalten des Schlamms verwirklichen zu können, ist es weiterhin vorteilhaft, im Anfangsbereich der Feststoffabtrennzone einen Wärmetauscher anzuordnen. Dadurch kann im Anfangsbereich der Feststoffabtrennzone das ankommende, zur Einstellung optimaler Abbaubedingungen in der Reaktionszone erwärmte Flüssigkeits-Feststoffgemisch abgekühlt werden, wodurch die methanbildenden Mikroorganismen die Gasbildung reversibel einstellen. Eine Flotation des Schlamms kann dadurch unterbunden werden.

Besonders zweckmäßig ist es dabei, wenn der Wärmetauscher mit der Zuleitung für zu behandelndes Substrat in Verbindung steht. Damit wird bereits vor dem eigentlichen anaeroben Abbau eine Vorwärmung des zu behandelnden Substrats erreicht, so daß dadurch in Verbindung mit der guten Isolationswirkung der Feststoffabtrennzone die äußere Wärmezufuhr in der Reaktionszone erheblich vermindert werden kann.

Zwei Ausführungsbeispiele der erfindungsgemäßen Anlage sind in der Zeichnung schematisch dargestellt.

Figur 1 zeigt eine Anlage, bei der die Trennwand zwischen Reaktionszone und Feststoffabtrennzone senkrecht und die Außenwand der Feststoffabtrennzone schräg nach oben verläuft.

Die Figur 2 zeigt eine Anlage, bei der die Trennwand zwischen Reaktionszone und Feststoffabtrennzone schräg nach oben und die Außenwand der Feststoffabtrennzone senkrecht angeordnet ist.

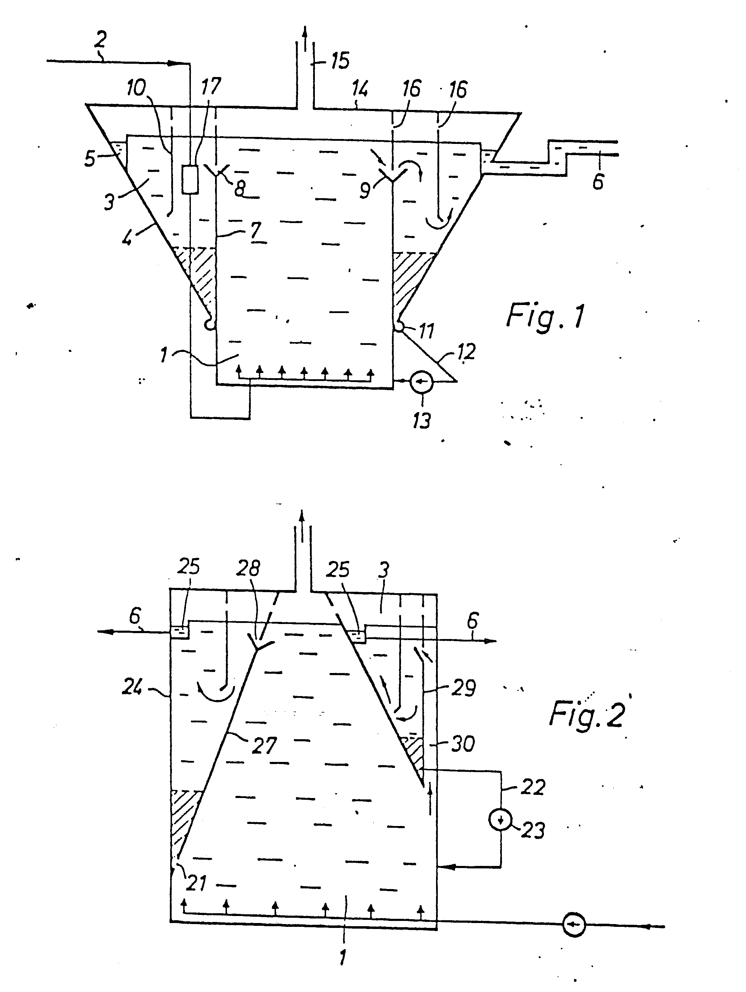

In der Figur 1 ist mit 1 eine zylindrische oder auch eine rechteckige Reaktionszone eines Anaerobreaktors bezeichnet, die im unteren Bereich einen Zulauf 2 für zu behandelndes organisches Substrat aufweist. An die Reaktionszone 1 ist außen ringförmig eine Feststoffabtrennzone 3 angehängt, deren Außenwand 4 in der Weise schräg nach oben verläuft, daß sich im Querschnitt eine steil trichterförmige Gestalt der Feststoffabtrennzone 3 ergibt.

In der Feststoffabtrennzone 3 ist im oberen Bereich ein Überlauf 5 für behandeltes Substrat angeordnet, an den eine Ableitung 6 angeschlossen ist. Zum Überleiten von Flüssigkeits-Feststoffgemisch aus der Reaktionszone 1 in die Feststoffabtrennzone 3 ist im oberen Bereich der Trennwand 7 zwischen beiden Zonen ein Einlauf 8 vorgesehen, der beispielsweise durch eine sich zumindest teilweise über den Umfang der Trennwand 7 erstreckende Spaltöffnung gebildet sein kann. Damit schon ein wesentlicher Teil der in der Reaktionszone 1 aufgrund der anaeroben Vorgänge gebildeten Gasblasen nicht mit in die Feststoffabtrennzone 3 übergeleitet wird, ist der Einlauf 8 mit V-förmigen Leitblechen 9 versehen, so daß das in der Reaktionszone 1 aufsteigende Flüssigkeits-Feststoffgemisch zum Einlauf 8 hin nach unten umgelenkt wird, wodurch ein wesentlicher Teil der ebenso aufsteigenden Gasblasen aus dem Flüssigkeits-Feststoffgemisch abgeschieden wird. Durch die V-förmige Anordnung der Leitbleche 9 erfährt das in die Feststoffabtrennzone 3 übergeleitete Flüssigkeits-Feststoffgemisch zunächst wieder eine nach oben gerichtete Strömung. Eine Tauchwand 10 in der Feststoffabtrennzone 3, die den Anfangsbereich der Feststoffabtrennzone 3 vom Endbereich, dem der Überlauf 5 zugeordnet ist, trennt, erzwingt dann jedoch im Anfangsbereich eine nach unten gerichtete Strömung, wobei durch die Strömungsumkehrung weitgehend die am Flüssigkeits-Feststoffgemisch noch anhaftenden Gasblasen abgetrennt werden. Dadurch, daß auf der anderen Seite der Tauchwand 10 im Endbereich der Feststoffabtrennzone 3 wieder eine nach oben gerichtete Strömung zum Überlauf 5 vorherrscht, erfolgt bei der Strömungsumkehrung unter der Tauchwand 10 eine Trennung von Schlamm und Flüssigkeit, wobei der Schlamm von dieser Schlammabtrennzone nach unten sinkt. Die steil trichterförmige Ausbildung der Feststoffabtrennzone 3 bewirkt dabei eine Eindickung des absinkenden Schlamms. Dieser wird aus dem unteren Bereich der Feststoffabtrennzone 3 über eine an der Trichterspitze angeschlossene Ringleitung 11 und eine dieser zugeordneten Schlammrückleitung 12 mit Förderpumpe 13 in den unteren Bereich der Reaktionszone 1 geleitet.

Wie dargestellt ist, ist die Feststoffabtrennzone 3 weitgehend auf der ganzen Höhe der Reaktionszone 1 ausgebildet, wodurch das in der Feststoffabtrennzone 3 vorhandene Flüssigkeits-Feststoffgemisch sowie der abgeschiedene Schlamm als Isolierung für die Reaktionszone 1 wirken. Damit die aus der Reaktionszone 1 und der Feststoffabtrennzone 3 aufsteigenden Gasblasen aufgefangen werden können, ist über der Reaktionszone 1 und der Feststoffabtrennzone 3 eine gegen die Atmosphäre geschlossene Abdeckung 14 vorhanden, an die eine Gasableitung 15 angeschlossen ist. Die Tauchwand 10 in der Feststoffabtrennzone 3 ist dabei an die Abdeckung 14 angehängt. Sowohl die Tauchwand 10 als auch die Trennwand 7 sind oberhalb des sich ausbildenden Flüssigkeitspiegels mit Gasdurchtrittsöffnungen 16 versehen.

Im Anfangsbereich der Feststoffabtrennzone ist ein Wärmetauscher 17 angeordnet, über den der Zulauf 2 für organisches Substrat zum unteren Bereich der Reaktionszone 1 geführt ist. Dadurch kann die im Flüssigkeits-Feststoffgemisch, das in die Feststoffabtrennzone 3 übergeleitet wird, enthaltene Wärmemenge auf das zu behandelnde Substrat übertragen werden. Die damit verbundene Abkühlung des Flüssigkeits-Feststoffgemisches im Anfangsbereich der Feststoffabtrennzone 3 bewirkt eine Verringerung der Gasbildung der Methanbakterien, so daß der Schlamm nicht mehr flotiert und gut sedimentiert, während die Vorwärmung des organischen

Substrats die Aufrechterhaltung der für die anaeroben Vorgänge in der Reaktionszone 1 benötigten Temperaturen erleichtert. Statt die Zuleitung 2 für organisches Substrat über den Wärmetauscher 17 zu leiten, besteht auch die Möglichkeit, einen weiteren Wärmetauscher in der Zuleitung 2 vorzusehen und beide Wärmetauscher über einen Kreislauf für ein Wärmeträgermedium zu verbinden.

Die Ausführungsform nach Figur 2 unterscheidet sich von der nach Figur 1 im wesentlichen dadurch, daß in diesem Fall die Trennwand 27 zwischen Reaktionszone 1 und Feststoffabtrennzone 3 in der Weise schräg nach oben verlaufend angeordnet ist, daß sich die Reaktionszone 1 konisch nach oben verjüngt. Die Außenwand 24 kann dann senkrecht verlaufen, wodurch die Gesamtanlage baustatisch vereinfacht wird.

Außerdem ist, wie in der linken Hälfte der Figur 2 gezeigt ist, in der Trennwand 27 nahe ihres Auftreffens auf die Außenwand eine Durchtrittsöffnung 21 vorhanden, die zur Schlammrückführung aus der Feststoffabtrennzone 3 in die Reaktionszone 1 dient. Diese kann aus einer Ringöffnung oder aus mehreren einzelnen Öffnungen gebildet sein. Zur Regulierung des zurückzuführenden Schlammstroms kann die Durchtrittsöffnung 21 mit einer der Übersichtlichkeit wegen nicht dargestellten Einrichtung zur Einstellung des Mengenstroms versehen sein, die beispielsweise eine einfache Schiebervorrichtung sein kann.

In der rechten Hälfte der Figur 2 ist eine weitere Ausführungsmöglichkeit für die Anordnung des Einlaufs 28 von der Reaktionszone 1 in die Feststoffabtrennzone 3 und des Überlaufs 25 für behandeltes Substrat gezeigt. In diesem Fall weist die Feststoffabtrennzone 3 zumindest auf einem Teil des Umfangs auf ihrer Außenseite eine eigene Wand 29 auf, die mit Abstand von der Außenwand 24 der Reaktionszone 1 angeordnet ist. Dadurch wird zwischen beiden Wänden ein Aufstiegsschacht 30 gebildet, durch den das Flüssigkeits-Feststoffgemisch aus der Reaktionszone 1 aufsteigt und über die Oberkante der Wand 29 in die Feststoffabtrennzone 3 gelangt. Der Überlauf 25 für behandeltes organisches Substrat ist dann zweckmäßigerweise im oberen Bereich der Trennwand zwischen Reaktionszone 1 und Feststoffabtrennzone 3 angeordnet. Für die Ausbildung eines Aufstiegsschachtes 30 sollte die Feststoffabtrennzone 3, wie dargestellt, nicht auf der ganzen Höhe der Reaktionszone 1 ausgebildet sein, da ansonsten der Aufstieggschacht 30 nicht mit dem oberen Bereich der Reaktionszone 1 in Verbindung steht und die Gefahr gegeben ist, daß unbehandeltes Substrat aufsteigt. Der Vorteil dieser Ausführungsform ergibt sich dadurch, daß nur ein geringer Teil der in der Reaktionszone 1 gebildeten Gasblasen durch den Aufstiegsschacht 30 in die Feststoffabtrennzone 3 gelangen kann und der Hauptanteil der Gasblasen durch die konisch nach oben zulaufende Trennwand 27 aufgefangen und zum oberen Bereich der Reaktionszone 1 geleitet wird. Die Rückführeinrichtung für den Schlamm besteht dann zweckmäßigerweise wie im Ausführungsbeispiel nach Figur 1 aus einer der Trichterspitze der Feststoffabtrennzone 3 zugeordneten Schlammrückleitung 22 mit Förderpumpe 23 zum unteren Bereich der Reaktionszone 1.

## Patentansprüche

1. Anlage zum anaeroben Abbau organischer Substrate mit einem unter anaeroben Bedingungen betriebenen Anaerobreaktor, der eine Reaktionszone und dieser nachgeschaltet eine Feststoffabtrennzone, eine Zuleitung für zu behandelndes Substrat und eine Ableitung für behandeltes Substrat sowie eine Gasableitung für Faulgas aufweist, dadurch gekennzeichnet, daß die Feststoffabtrennzone (3) außen ringförmig um die Reaktionszone (1) angeordnet ist, die Feststoffabtrennzone (3) durch zumindest teilweise schräge Anordnung ihrer Außenwand (4) und/oder der Trennwand (7) zwischen Reaktionszone (1) und Feststoffabtrennzone (3) im Querschnitt steil trichterförmig ausgebildet ist, in der Feststoffabtrennzone (3) eine ringförmige Tauchwand (10) angebracht ist und im unteren Bereich der Feststoffabtrennzone (3) eine Rückführeinrichtung (11,12,13;21) für Schlamm in die Reaktionszone (1) vorhanden ist.

2. Anlage nach Anspruch 1, dadurch gekennzeichnet, daß die Reaktionszone (1) und die Feststoffabtrennzone (3) mittels einer Abdeckung (14) gegen die Atmosphäre geschlossen ausgebildet sind und die Trennwand (7) sowie die Tauchwand (10) oberhalb des sich ausbildenden Flüssigkeitsspiegels Gasdurchtrittsöffnungen (16) aufweisen.

3. Anlage nach Anspruch 1 oder 2, dadurch gekennzeichnet, daß die Rückführeinrichtung für Schlamm eine vom unteren Bereich der Feststoffabtrennzone (3) zum unteren Bereich der Reaktionszone (1) führende Schlammrückführleitung (12) mit Förderpumpe (13) aufweist.

4. Anlage nach Anspruch 1 oder 2, dadurch gekennzeichnet, daß die Rückführeinrichtung für Schlamm mindestens eine in der Trennwand (7) zwischen Reaktionszone (1) und Feststoffabtrennzone (3) vorhandene Durchtrittsöffnung (21) mit einer Einrichtung zur Einstellung des Mengenstromes aufweist.

5. Anlage nach einem der Ansprüche 1 bis 4, dadurch gekennzeichnet, daß die Höhe der Feststoffabtrennzone (3) weitgehend der Höhe der Reaktionszone (1) entspricht.

6. Anlage nach einem der Ansprüche 1 bis 5, dadurch gekennzeichnet, daß im Anfangsbereich der Feststoffabtrennzone (3) ein Wärmetauscher (17) angeordnet ist.

7. Anlage nach Anspruch 6, dadurch gekennzeichnet, daß der Wärmetauscher (17) mit der Zuleitung (2) für zu behandelndes Substrat in Verbindung steht.

Fig.1

Fig.2

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 491 502 (BIOMECHANICS)<br><br>* Seite 3, Zeile 102 - Seite 5, Zeile 37 *<br><br>--- | 1,2,4-7 | C 02 F 3/28 |
| A | CH-A- 255 420 (J. HARTMANN)<br>* Seite 1, Zeile 48 - Seite 2, Zeile 12 *<br><br>--- | 1,5 | |
| A | DE-C- 253 686 (A. JÜNGER)<br>* Seite 1, Zeilen 14-54 *<br><br>--- | 1,4,5 | |
| A | FR-A-2 154 851 (DEGREMONT)<br>* Seite 1 - Seite 2, Zeile 16 *<br><br>----- | 1,4,5 | |

RECHERCHIERTE SACHGEBIETE (Int. Cl.4)

C 02 F
C 12 M

Der vorliegende Recherchenbericht wurde für alle Patentansprüche erstellt.

| Recherchenort | Abschlußdatum der Recherche | Prüfer |
|---|---|---|
| DEN HAAG | 29-11-1984 | TEPLY J. |